Europäisches Patentamt

European Patent Office

Office européen des brevets

(11) Veröffentlichungsnummer: **0 261 640 B1**

(12) **EUROPÄISCHE PATENTSCHRIFT**

(45) Veröffentlichungstag der Patentschrift: **22.05.91**

(51) Int. Cl.⁵: **A01G 9/14, A01G 13/04**

(21) Anmeldenummer: **87113830.1**

(22) Anmeldetag: **22.09.87**

(54) **Folienbahn zum Abdecken einer Pflanzenreihe.**

(30) Priorität: **25.09.86 CH 3845/86**

(43) Veröffentlichungstag der Anmeldung:
**30.03.88 Patentblatt 88/13**

(45) Bekanntmachung des Hinweises auf die
Patenterteilung:
**22.05.91 Patentblatt 91/21**

(84) Benannte Vertragsstaaten:
**AT BE CH DE FR GB LI LU**

(56) Entgegenhaltungen:
**EP-A- 0 017 498**
**DE-A- 1 782 150**
**DE-A- 2 109 397**
**FR-A- 1 512 100**

(73) Patentinhaber: **BREVETEAM S.A.**
**c/o Dr. Paul Stadlin Gartenstrasse 2 Postfach 758**
**CH-6300 Zug(CH)**

(72) Erfinder: **Der Erfinder hat auf seine Nennung
verzichtet**

(74) Vertreter: **Lesser, Karl-Bolko, Dipl.-Ing.
European Patent Attorney Johanneskirchnerstrasse 149a
W-8000 München 81(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Folienbahn zum Abdecken von Pflanzenreihen, in form eines abgestützten halbkreisförmigen Folientunnels, die mit ihren Längsrändern am Erdboden festlegbar ist und Einrichtungen zum Belüften der Pflanzen aufweist.

Solche Folienbahnen werden z.B. bei einem bekannten Folientunnel benutzt. Die Folie dieses bekannten Folientunnels weist in drei streifenförmigen Bereichen einen kreisförmigen Querschnitt aufweisende Löcher auf, die durch entsprechendes Herausstanzen gebildet wurden. Diese Streifen sind im Scheitelbereich und in der Nähe der beiden Längsränder angeordnet. Dadurch wird eine Folie erhalten, die allzeit gleichmäßigen Durchlaß für die Luft und auch Regenwasser zuläßt. Die immer vorhandenen und immer gleich großen Öffnungen lassen aber auch zu, daß schon ein leichter Luftzug ausreicht, um die Luft innerhalb eines mit dieser Folie gebildeten Tunnels mit der Luft außerhalb des Tunnels auszutauschen. Dies ist jedoch nicht immer erwünscht. Durch die Öffnungen im Scheitelbereich wird erreicht, daß innerhalb des Tunnels kein Hitzestau ensteht, während insbesondere durch die Öffnungen im Randbereich der Bahn erreicht wird, daß innerhalb des Tunnels kein $CO_2$-Mangel auftritt. Auf diesen bekannten Folientunnel auftreffendes Regenwasser läuft fast vollständig ab, sodaß die unter diesem Folientunnel heranwachsenden Pflanzen in der Regel künstlich bewässert werden müssen.

Der Erfindung liegt die Aufgabe zugrunde, eine gattungsgemäße Folienbahn zu schaffen, die es gestattet, das unter der Folienbahn liegende Erdreich gezielt zu tränken, die aber andererseits den Luftaustausch durch die Folienbahn hindurch zumindestens hemmt.

Diese Aufgabe wird durch die Erfindung gelöst. Die erfindungsgemäße Folienbahn zeichnet sich durch die Einrichtungen, die in der Folienbahn angeordnete, dort als Ventile wirkende Laschen sind, aus. Anstelle von immer geöffneten kreisförmigen Öffnungen sind nun hier sich öffnende und schließende Laschen vorgesehen. Die Laschen liegen im Gleichgewichtszustand in der Ebene der Tunnelfolie und schirmen somit das Innere des Tunnels gegenüber der Umgebungsluft des Tunnels ab. Dabei sind die Laschen in auf jeder Seite mindestens einer von der Mittelachse der Folienbahn beabstandeten Reihe angeordnet. Die Folienbahn enthält dadurch auf jeder der beiden Tunnelseiten mindestens eine Reihe von Laschen. Die Reihen von Laschen sind von dem jeweiligen Längsrand der Folienbahn zwischen einem Drittel und einem Sechstel der Breite der Folienbahn entfernt. Geht man von einem einen halbkreisförmigen Querschnitt (Scheitelpunkt bei 90°) aufweisenden Tunnel aus, so sollten die Reihen der Laschen im Winkelbereich zwischen 60° und 30° angeordnet sein. Dadurch wird nicht nur ein senkrechtes Auffallen der Regentropfen auf die Laschen im wesentlichen verhindert, es wird auch dafür gesorgt, daß das eindringende Wasser nicht auf die im Tunnel heranwachsenden Pflanzen trifft.

Aus der EP-A-0 017 498 ist ein Pflanzentunnel aus einem rohrförmigen Rahmen mit zwei Längs-Seitenwänden und einem Dach mit einem Dachfirst bekannt, an dem eine Folie dadurch festgelegt ist, daß die Folie mit streifenförmigen Zusatzfolien versehen ist, die partiell mit der Hauptfolie verschweißt sind. Die rohrförmigen Rahmenteile werden zwischen zwei benachbarten Abschweißungen durchgeschoben.

Diese Abschweißungen sind etwa rechteckigförmig ausgebildet. Innerhalb dieser Abschweißungen sind U-förmige Schlitze durch beide Folien hindurch ausgebildet, deren Enden in kreisförmigen Öffnungen enden und Laschen bilden. Diese Laschen liegen in den Ebenen ihrer Folien und können durch Regentropfen oder durch Überdruck innerhalb des Pflanzentunnels aus diesen Ebenen herausgebogen werden.

Gemäß einer Ausführungsform der Erfindung sind die freien Enden der Laschen von der Längsachse der Folienbahn weggerichtet, wobei zweckmäßigerweise die Mittelachse einer einzelnen Lasche auf der Längsachse der Folienbahn etwa senkrecht steht. Die Laschen sind gegenüber der restlichen Folienbahn ausschwenkbar.

Besteht nun ein größerer Temperaturunterschied zwischen den beiden Seiten der Folienbahn und damit auch ein Druckunterschied, so werden die Laschen aus der Folienebene herausgedrückt und es kann ein Druckausgleich und damit ein Luftaustausch stattfinden. Ist die Temperatur unter der Folienbahn, z.B. durch ständige Sonneneinstrahlung, wesentlich höher, als über der Folienbahn, herrscht also unter der Folie ein Überdruck, so werden die Laschen nach außen aufgebogen und die Luft kann entweichen. Ist der Druckausgleich vollzogen, so werden die Laschen nicht mehr nach außen gedrückt und schließen sich wieder. Dabei wird das Bestreben der Folie ausgenutzt, sich auch im Bereich der Laschen wieder der Form der Restfolie anzupassen.

Ist die Temperatur unter der Folienbahn niedriger, als über der Folienbahn, so entsteht unter der Folienbahn ein Unterdruck und die Laschen öffnen sich nach innen.

Wenn es regnet, dann läuft das Regenwasser von der Folienbahn ab. Das Regenwasser gelangt dabei, tropfenweise oder in Rinnsalen, auch in den Bereich der Laschen, wodurch auf diese durch die Schwerkraft ein Druck nach unten ausgeübt wird. Das Regenwasser drückt insbesondere die Spitze der Lasche mehr oder weniger in das Innere des Tunnels. Das Wasser läuft auf die Spitze der Lasche zu und sammelt sich dort an. Von dort tropft das Wasser senkrecht auf das Erdreich unter der Folienbahn hinab. Selbst bei starken Regen können einzelne, schräg auf die Folienbahn treffende Tropfen nicht direkt auf die Pflanze unterhalb der Folienbahn gelangen, da sie immer erst auf die Laschen auftreffen, von denen sie nur ablaufen können.

Bei den bekannten Loch-Folientunnel können schräg durch die Löcher hindurchregnende Wassertropfen ungehindert auf die Pflanze treffen, was bei manchen Pflanzen nicht erwünscht ist.

Gemäß einer besonderen Ausführungsform der Erfindung sind auf jeder Seite mehrere Reihen von Laschen vorgesehen. Dann empfiehlt es sich, die Laschen der einen Reihe gegenüber den Laschen der anderen Reihe versetzt anzuordnen. So kann an einer Lasche vorbeigelaufenes Regenwasser der oberen Reihe zu einer Lasche der darunterliegenden Reihe und durch die sich dann nach innen biegenden Laschen in das Innere des Tunnels gelangen. Dadurch kann die Ausbeute des in das Innere des Tunnels gelangenden Wassers insbesondere gegenüber den Loch-Folientunneln sehr stark erhöht werden.

Die Laschen weisen eine Form und Größe auf und die Folie besitzt eine Steifigkeit, derart, daß die unbelasteten Laschen, auch wenn diese horizontal liegen, nicht durch ihr Eigengewicht aus der Folienebene wesentlich herausschwenken. Die Laschen liegen somit im unbelasteten Zustand in der Ebene der restlichen Folie.

Gemäß einer besonderen Ausführungsform der Erfindung laufen mehrere, insbesondere durch Prägen der Folie gebildete Leitrinnen auf die Enden der Laschen zu. Hierdurch kann noch mehr Regenwasser den Laschen zugeführt werden. Besonders vorteilhaft sind dann die der Lasche abgewandten Enden der Leitrinnen einer Bahnseite über die Länge der Bahn gleichmäßig verteilt angeordnet.

Gemäß einer Ausführungsform der Erfindung sind die Laschen V-förmig ausgebildet und ihre Spitzen weisen von der Mittelachse der Folienbahn weg. Eine solche Lasche läßt sich auch schon durch wenig Wasser leicht öffnen, da das Wasser auf der Lasche bis zu deren Spitze abläuft und sich die Spitze leichter ausschwenken läßt. Der Öffnungswinkel der V-Form der Laschen beträgt vorteilhafterweise zwischen 15° und 45°. V-förmig ausgebildete Laschen in ei-ner Folie sind aus der DE-A-1 782 150 als solches bekannt.

Gemäß einer anderen Ausführungsform weisen die Laschen die Form eines Kreissegmentes auf. Dieses Kreissegment kann eine Fläche aufweisen, die größer oder kleiner als die Hälfte der entsprechenden Kreisfläche ist. Bei kleinerer Fläche ist die Lasche schuppenförmig ausgebildet. Dadurch gelangt im Bereich der Lasche ablaufendes Wasser auf die Lasche, deren freies Ende sich dann nach innen ausschwenkt.

Vorteilhafterweise ist nicht die gesamte Fläche der Folie mit Laschen versehen. So sollte vorteilhafterweise der Tunnel im Scheitelbereich keine V-förmigen Laschen aufweisen. Auch im Bereich des Bodens empfiehlt es sich, keine Laschen vorzusehen. Die Folie kann dann z.B. am Boden befestigt werden, ohne daß die Folie in diesem Bereich wegen einer durch die Schlitze hervorgerufenen Schwächung zerstört würde.

In der Mittelachse der Folienbahn können kreissegmentförmig ausgebildete Laschen vorgesehen sein, deren Fläche gegenüber der Fläche der anderen Laschen insbesondere wesentlich kleiner ist. Diese Laschen dienen im wesentlichen der Vermeidung von Hitzestau im Innern des Tunnels, indem sie die sich insbesondere im Scheitel des Tunnels ansammelnde wärmere Luft nach außen ableiten können.

Weitere Einzelheiten der Erfindung ergeben sich aus im Folgenden anhand der Zeichnung beschriebenen Ausführungsbeispielen.

Es zeigt:

| | |
|---|---|
| Figur 1 | eine perspektivische Ansicht eines Folientunnels, bei dem eine Folienbahn auf Tunnelstützen abgelegt ist; |
| Figur 2 | einen Auschnitt des Tunnels in einer Seitenansicht, gemäß einer Ausführungsform; |
| Figur 3 | einen Auschnitt des Tunnels in einer Seitenansicht, gemäß einer anderen Ausführungsform; |
| Figur 4 | einen Auschnitt des Tunnels in einer Seitenansicht, gemäß einer dritten Ausführungsform; |
| Figur 5 | einen Querschnitt durch den Tunnel, wobei in der rechten Hälfte Laschen nach außen und in der linken Hälfte nach innen vorstehen. |

Ein Folientunnel 1 besteht im wesentlichen aus einer - hier - länglichen Folienbahn 2, die auf - hier - zwei Stützbogenpaaren 3 mit einzelnen, in den Erdboden eingesteckten und gebogenen Stützbogen 3' und 3" abgelegt ist und über diese hervorsteht. Die beiden über die Stützbogenpaare 3 hervorstehenden Enden 5 der Folienbahn 2 sind zusammengefaßt, z.B. zusammengeschnürt, und - hier - am Erdboden 4 festgelegt sind. Die Längsränder 6 der Folienbahn 2 sind - hier - darüberhinaus mit Heringen 7 am Erdboden 4 festgelegt. Insoweit ist der Folientunnel bekannt. Er kann auch anders ausgebildete bekannte Stützen aufweisen und die Folienbahn 2 kann anders in bekannter Weise festgelegt sein.

Die Folienbahn 2 weist gemäß einem Teil der Figuren in zu ihrer Längsrichtung parallelen Reihen V-förmig ausgebildete Schlitze 8 auf, die zwischen den beiden Schlitzen 8 Laschen 9 bilden. Gemäß Figuren 1 und 2 ist auf beiden Seiten des Tunnels 1 je eine Reihe von Laschen 9 vorgesehen. Gemäß Figur 3 sind auf jeder Seite des Tunnels 1 zwei Reihen von Laschen vorgesehen, wobei - hier -senkrecht zur Längsrichtung des Tunnels gesehen, die Laschen9 einer Reihe gegenüber den Laschen 9 der benachbarten Reihe versetzt angeordnet sind. Sind z.B. mehr als zwei Reihen vorgesehen, so können auch die Laschen 9 aller Reihen gegeneinander versetzt sein.

Gemäß einer nicht dargestellten Ausführungsform sind die Laschen einander benachbarter Reihen in einer senkrecht zur Längsachse des Tunnels 1 ausgerichteten Linie ausgerichtet, also nicht gegeneinander versetzt.

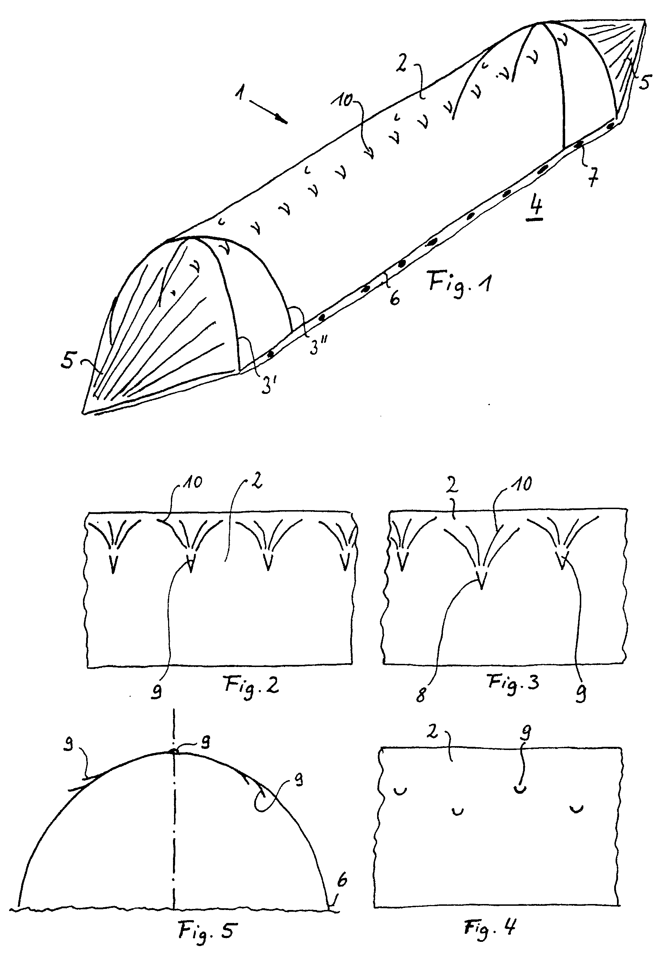

Figur 4 zeigt nun Laschen 9, die kreissegmentförmig ausgebildet sind. Diese Kreissegmente entsprechen hier etwa einem Halbkreis, sie können aber auch größer oder kleiner als ein Halbkreis sein.

Bei den beiden Ausführungsformen gemäß Figuren 2 und 3 sind weiterhin mehrere, insbesondere durch Prägen der Folie gebildete Leitrinnen 10 angeordnet, die auf die Enden der Laschen zulaufen. Der Abstand dieser Leitrinnen 10 voneinander wird auf die Mittelachse der Folienbahn 2 hin größer. Dabei kann der Abstand an dem den Laschen abgewandten Ende der Leitrinnen einer Lasche dem Abstand zwischen den Leitrinnen zweier benachbarter Laschen 9 entsprechen.

Bei mehr als einer Reihe von Laschen 9 auf jeder Seite sind die den Laschen 9 abgewandten Enden der Leitrinnen 10 aller Laschen 9 über die Länge der Folienbahn 2 gleichmäßig verteilt. Auf diese Art und Weise kann alles oberhalb der Laschen 9 auf die Folienbahn 2 ablaufende Wasser zu den Laschen geführt werden.

Wie sich aus Figuren 1 und 5 ergibt sind in der Scheitellinie des Tunnels 1 bzw. in der Mittellängsachse der Folienbahn 2 kreissegmentförmige Laschen 9 angeordnet, die - hier - kleiner ausgebildet, als die Laschen 9 an den beiden Seiten der Folienbahn 2 und deren Mittelachse in der Mittelachse der Folienbahn 2 liegen.

Die V-förmigen Laschen 9 können eine Länge zwischen 20 mm und 50 mm aufweisen. Größere Laschen 9 öffnen sich schon bei geringeren Wassermengen leichter, während kleinere Laschen 9 dem Verschwenken durch ablaufendes Wasser einen größeren Widerstand entgegenbringen.

Anhand der Figur 5 soll nun die Funktionsweise der Folienbahn 2 beschrieben werden.

Die kleinen segmentförmigen Laschen 9 in der Mittelachse der Folienbahn 2 dienen im wesentlichen dazu einen Hitzestau zu verhindern, indem sie sich bei großer Hitze im Innern des Tunnels 1 nach außen öffnen. Dies wird unter Ausnutzung des bei großer Hitze im Innern des Tunnels herrschenden Überdruckes bewirkt, der die Laschen nach außen drückt.

Ist der Hitzestau besonders groß, so können sich auch die seitlichen Laschen 9 nach außen hin öffnen, wie dies in der linken Hälfte der Figur 5 dargestellt ist. Deren Aufgabe liegt aber im wesentlichen woanders.

Trifft Wasser, wie Regenwasser, auf den Folientunnel 1, so läuft dieses an der Folienbahn 2 außen nach unten ab. Durch die Leitrinnen 10 (vgl. Figuren 2 und 3) kann dieses Wasser auf die Laschen 9 zu gelenkt werden. Das auf die Laschen gelangende Wasser lenkt diese durch sein Gewicht in das Innere des Tunnels ab, wie sich aus der rechten Hälfte der Figur 5 ergibt. Das Wasser läuft an den Kanten der Lasche 9 bis zu deren tiefster Stelle, von wo es in das Innere des Tunnels abtropft. Sobald die Lasche 9 nicht mehr durch Wasser belastet ist, schließt sie sich wieder und unterbricht die Verbindung zwischen dem Inneren des Tunnels 1 und seiner Umgebung.

Die vorstehenden Ausführungsbeispiele stellen keine Beschränkung der Kombinationen der einzelnen Erfindungsmerkmale dar. So können auch segmentförmig und V-förmig ausgebildete Laschen kombiniert vorliegen. Die Leitrinnen können in der flachen Folienbahn gerade oder auch gebogen sein.

## Ansprüche

1. Folienbahn zum Abdecken von Pflanzenreihen in Form eines abgestützten, halbkreisförmgen, Folientunnels, die mit ihren Längsrändern am Erdboden festlegbar ist und Einrichtungen zum Belüften der Pflanzen aufweist, dadurch gekennzeichnet, daß die Einrichtungen in der Folienbahn (2) angeordnete, dort als Ventile wirkende Laschen (9) sind, wobei die Laschen (9) in auf jeder Seite mindestens einer von der Mittelachse der Folienbahn (2) beabstandeten Reihe angeordnet sind und die Reihen der Laschen von dem jeweiligen Längsrand der Folienbahn (2) zwischen einem Drittel und einem Sechstel der Breite der Folienbahn (2) entfernt sind.

2. Folienbahn nach Anspruch 1, dadurch gekennzeichnet, daß die freien Enden der Laschen (9) von der Längsachse der Folienbahn (2) weggerichtet sind und insbesondere die Mittelachse einer einzelnen Lasche (9) auf der Längsachse der Folienbahn (2) etwa senkrecht steht.

3. Folienbahn nach Anspruch 1 oder 2, dadurch gekennzeichnet, daß die Laschen (9) gegenüber der restlichen Folienbahn (2) ausschwenkbar sind.

4. Folienbahn nach einem der vorhergehenden Ansprüche, dadurch gekennzeichnet, daß auf jeder Seite der Folienbahn (2) jeweils mindestens zwei Reihen von Laschen (9) angeordnet sind und die Laschen (9) einer Reihe gegenüber den Laschen (9) der anderen Reihe bzw. der benachbarten Reihen versetzt sind.

5. Folienbahn nach einem der vorhergehenden Ansprüche, dadurch gekennzeichnet, daß die Laschen (9) eine Form und Größe aufweisen und die Folienbahn (2) eine Steifigkeit besitzt, derart, daß die unbelasteten Laschen (9), auch wenn diese horizontal liegen, nicht durch ihr Eigengewicht aus der Ebene der Folienbahn (2) wesentlich herausschwenken.

6. Folienbahn nach einem der vorhergehenden Ansprüche, dadurch gekennzeichnet, daß mehrere, insbesondere durch Prägen der Folienbahn (2) gebildete Leitrinnen (10) auf die Enden der Laschen (9) zulaufen.

7. Folienbahn nach dem vorhergehenden Anspruch, dadurch gekennzeichnet, daß die der Lasche (9) abgewandten Enden der Leitrinnen (10) einer Bahnseite über die Länge der Folienbahn (2) gleichmäßig verteilt sind.

8. Folienbahn nach einem der vorhergehenden Ansprüche, dadurch gekennzeichnet, daß die Laschen (2) V-förmig ausgebildet sind und ihre Spitzen von der Mittelachse der Folienbahn (2) weg weisen.

9. Folienbahn nach dem vorhergehenden Anspruch, dadurch gekennzeichnet, daß der Öffnungswinkel der V-Form der Laschen (2) zwischen 15° und 45° beträgt.

10. Folienbahn nach einem der vorhergehenden Ansprüche, dadurch gekennzeichnet, daß die Laschen (9) die Form eines Kreissegmentes aufweisen.

11. Folienbahn nach einem der vorhergehenden Ansprüche, dadurch gekennzeichnet, daß in der Mittelachse der Folienbahn (2) insbesondere kreissegmentförmig ausgebildete Laschen (9) vorgesehen sind, deren Fläche gegenüber der Fläche der anderen Laschen (9) insbesondere wesentlich kleiner ist.

**Claims**

1. Strip of sheet material for covering rows of plants in the form of a semi-circular supported sheet tunnel which can be secured to the ground by its longitudinal edges and has means for allowing access for air to the plants, characterised in that there are arranged in the strip of sheet material (2) tongues (9) acting there as valves, the tongues (9) being arranged in rows, at least one on each side spaced away from the central axis of the strip (2) and the rows of tongues being spaced away from the adjacent longitudinal edge of the strip (2) by between a third and a sixth of the width of the strip (2).

2. Strip of sheet material according to claim 1 characterised in that the free ends of the tongues (9) are directed away from the longitudinal axis of the strip (2) and in particular the central axis of an individual tongue (9) stands substantially perpendicular to the longitudinal axis of the strip (2).

3. Strip of sheet material according to claim 1 or 2 characterised in that the tongues (9) are capable of pivoting with respect to the remainder of the strip (2).

4. Strip of sheet material according to one of the foregoing claims characterised in that at least two rows of tongues (9) are arranged on each side of the strip (2) and the tongues (9) of one row are offset with respect to the tongues (9) of the other row or the adjacent rows.

5. Strip of sheet material according to one of the foregoing claims characterised in that the tongues (9) have a shape and size and the strip (2) has a stiffness such that the tongues (9) when unloaded, even when they lie horizontally, are not significantly deflected out of the plane of the strip (2) by their own weight.

6. Strip of sheet material according to one of the foregoing claims characterised in that a number of guide channels (19) in particular formed by stamping of the strip (2), lead towards the ends of the tongues (9).

7. Strip of sheet material according to the preceding claim characterised in that the ends of the guide channels (10) which are furthest from the tongues (9) on one side of the strip are distributed uniformly along the length of the strip (2).

8. Strip of sheet material according to one of the foregoing claims characterised in that the tongues (2) are formed of V-shape and their tips are directed away from the central axis of the strip (2).

9. Strip of sheet material according to preceding claims characterised in that the apex angle of the V-shape of the tongues (2) amounts to between 15° and 45°.

10. Strip of sheet material according to one of the foregoing claims characterised in that the tongues (9) have the shape of a segment of a circle.

11. Strip of sheet material according to one of the foregoing claims characterised in that tongues, in particular with a shape in the form of a segment of a circle, are provided on the central axis of the strip (2), the areas of these tongues being preferably significantly smaller than the areas of the other tongues (9).

## Revendications

1. Bande de film plastique destinée à recouvrir des rangées de plantes, en forme d'un tunnel en film plastique semi-circulaire soutenu, pouvant être fixée au sol par ses bords longitudinaux et présentant des dispositifs pour l'aération des plantes, caractérisée en ce que, dans la bande de film plastique (2), il est disposé des languettes (9) qui y fonctionnent comme des soupapes, les languettes (9) étant disposées de chaque côté en au moins une rangée distante de l'axe médian de la bande de film plastique (2) et les rangées de languettes étant distantes du bord longitudinal correspondant de la bande de film plastique (2) d'une distance comprise entre un tiers et un sixième de la largeur de la bande de film plastique (2).

2. Bande de film plastique suivant la revendication 1, caractérisée en ce que les extrémités libres des languettes (9) sont orientées dans le sens opposé à l'axe longitudinal de la bande de film plastique (2) et que, en particulier, l'axe médian d'une languette (9) individuelle est environ perpendiculaire à l'axe longitudinal de la bande de film plastique (2).

3. Bande de film plastique suivant la revendication 1 ou 2, caractérisée en ce que les languettes (9) peuvent s'articuler par rapport au reste de la bande de film plastique (2).

4. Bande de film plastique suivant l'une des revendications précédentes, caractérisée en ce que, de chaque côté de la bande de film plastique (2), il est chaque fois disposé au moins deux rangées de languettes (9) et que les languettes (9) d'une rangée sont décalées par rapport aux languettes (9) de l'autre rangée ou des rangées adjacentes.

5. Bande de film plastique suivant l'une des revendications précédentes, caractérisée en ce que les languettes (9) présentent une forme et une grandeur et que la bande de film plastique (2) a une rigidité telles que les languettes (9) non sollicitées, même lorsqu'elles se trouvent horizontales, ne se dévient pas sensiblement, sous leur propre poids, du plan de la bande de film plastique (2).

6. Bande de film plastique suivant l'une des revendications précédentes, caractérisée en ce que plusieurs sillons conducteurs (10), formés en particulier par gravure dans la bande de film plastique (2) convergent vers les extrémités des languettes (9).

7. Bande de film plastique suivant l'une des revendications précédentes, caractérisée en ce que les extrémités des sillons conducteurs (10) opposées à la languette (9), d'un côté de la bande, sont uniformément réparties sur la longueur de la bande de film plastique (2).

8. Bande de film plastique suivant l'une des revendications précédentes, caractérisée en ce que les languettes (9) se présentent en forme de V et que leurs pointes sont orientées dans le sens opposé à l'axe médian de la bande de film plastique (2).

9. Bande de film plastique suivant l'une des revendications précédentes, caractérisée en ce que l'angle d'ouverture de la forme en V des languettes (9) se situe entre 15° et 45°.

10. Bande de film plastique suivant l'une des revendications précédentes, caractérisée en ce que les languettes (9) se présentent sous forme d'un segment de cercle.

11. Bande de film plastique suivant l'une des revendications précédentes, caractérisée en ce que, dans l'axe médian de la bande de film plastique (2), il est prévu des languettes (9) se présentant, en particulier, sous forme de segments de cercle, dont la surface est, en particulier, sensiblement plus petite que la surface des autres languettes (9).

Fig. 1

Fig. 2

Fig. 3

Fig. 5

Fig. 4